# NEW EUROPEAN PATENT SPECIFICATION

(11) **EP 0 370 986 B2**
(45) Date of publication and mention of the opposition decision: **24.11.1999**
(45) Mention of the grant of the patent: 26.01.1994
(21) Application number: 89850409.7
(22) Date of filing: 23.11.1989
(51) Int. Cl.: F16L 19/02, F17C 13/00

(54) **Coupling for gas container**
Kupplung für Gasbehälter
Raccord pour conteneur de gaz

(30) Priority: 24.11.1988 SE 8804247
(43) Date of publication of application: 30.05.1990
(73) Proprietor: SANDVIK AKTIEBOLAG, 811 81 Sandviken (SE)
(72) Inventor: Berglund, Göran, S-811 31 Sabdvujeb (SE); Lyen, Gösta, S-191 51 Sollentuna (SE); Westberg, Torsten, S-790 23 Svardsjö (SE)
(74) Representative: Östlund, Alf Olof Anders

(56) References cited:
- EP-A- 0 303 840
- EP-A- 0 314 609
- DE-A- 3 736 579
- FR-A- 2 291 446
- US-A- 3 751 077
- US-A- 4 316 624
- US-A- 4 540 205
- PATENT ABSTRACTS OF JAPAN, vol. 7, no. 179 (M-234)[1324], 9th August 1983; & JP-A-58 82 626 (HITACHI) 15-05-1983
- Prospekt: BOSCH Verpackungstechnik "SERVAC 78 AS", Waiblingen, Deutschland, 1985
- Stainless steel compressed glass cylinders with MEGAPUR purity guarantee, MESSER GRIESHEIM, Edition 8029/II, February 1989

## Description

The present invention relates to a coupling for a gas container. The coupling is arranged between the gas container and a valve comprising a nut and co-operating flange surfaces. The container is arranged to contain pure gases under high pressure and comprises a top part, a bottom part and a mantle. The top part is provided with an externally threaded neck.

At certain gas applications in medicine, electronics and pharmaceutical industry there are extremely high demands upon the purity of the gases. Due to the purity demands the surfaces of details or material coming into contact with the gases have to be prepared in such a way that the risk of contamination by i.a. loose particles on the inner surfaces of the equipment is eliminated.

Traditional technique of manufacturing gas containers involves so-called "spinning" in hot condition of the ends of seamless tubes. Thereby, the whole container is prepared as one piece. Usually, high-strength low-alloyed Cr-Mo steels are used which demand heat treatment after the deformation process in order to give the desired strength properties. The design pressure of this kind of containers can be several hundred bar.

The problem of these known containers is that it has been found very difficult to make the extremely fine surfaces which the applications of pure gas demand. Furthermore, the carbon steels per se mean a potential impurity risk because the material is not corrosion resistant. Therefore, certain gases can react with the steel surface if moisture is present and will form corrosion products being unacceptable from the point of view of purity.

Until now, it has been found impossible to solve the above-mentioned problem by using conventional technique, because of the risks of "pipe" in the bottom during the welding and because of the rough surface, which is formed in the zone where the container becomes narrower towards the valve opening in the top of the container.

Conventional valve connections for gas containers are usually provided with conical threads made tight with some kind of packing material, TEFLON^{R} or similar. This kind of thread demands great carefulness during the connection of the valve in order to obtain a right sealing, and the direct contact between gas, packing and thread root means a potential impurity source both during the evacuation of the container at increased tempertures and during its use.

A coupling whose purpose is essentially different from the aim of the present invention and which is designed to be welded on a container for liquids is described in US-A-4,316,624. The known coupling comprises a connection part, an adapter and a nut. The adapter supports a tube being threaded in one part by which an unavoidable clearance is formed between the ends of the adapter and the tube in which impurities can be contained. The connection part is welded to a tube or similar in which liquid flows. Couplings are generally subjected to bending stresses and the location of the weld in the direct connection of the coupling is therefore unfavourable. The mentioned weld is also difficult to work because of poor accessibility.

A purpose of the present invention is to arrange a coupling for a gas container which counteracts a contamination of pure gases.

US-A-4316624 discloses a container coupling including convexly curved contact surfaces which sandwich a sealing ring therebetween.

EP-A-0303840 discloses a container coupling and a container for enclosing pure gas under high pressure, said container being made of a high-alloy chromium-nickel steel.

The invention is defined in the appended claim.

The invention will be described in detail with reference to the appended drawings.
Fig. 1 shows a split-up view of a coupling according to the present invention.
Fig. 2 shows the coupling in cross-section.
Fig. 3 shows the neck of a gas container in cross-section.
Fig. 4 shows an adapter in cross-section.
Fig. 5 shows a sealing ring in cross-section.
Fig. 6 shows the gas container in cross-section.

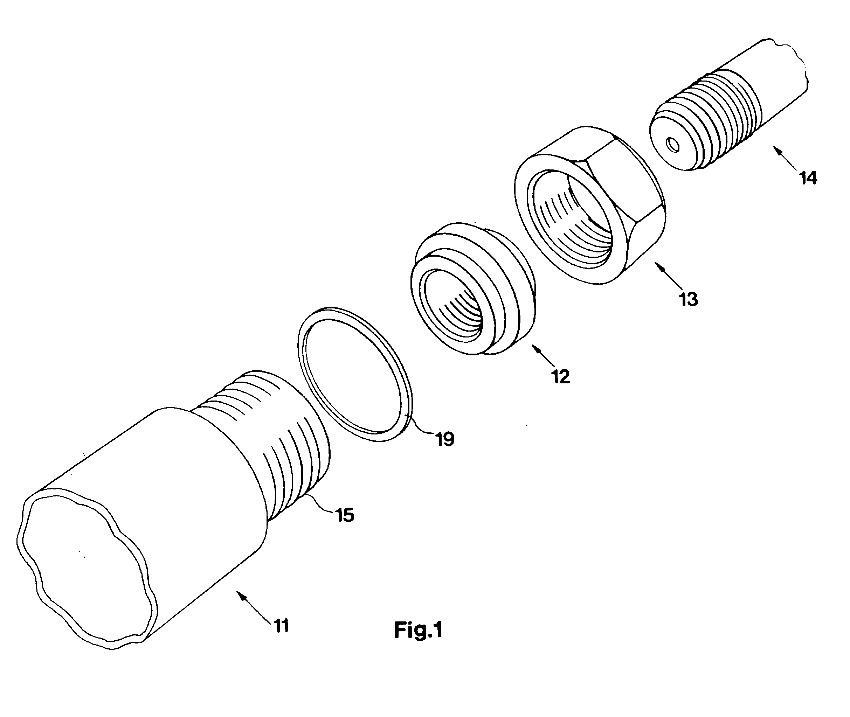

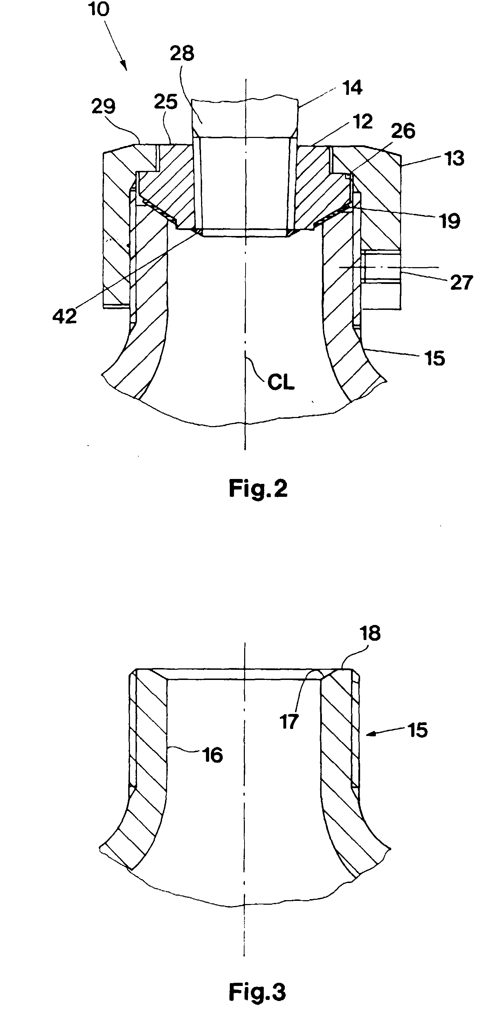

In Figs. 1 to 5 a preferred embodiment of a coupling according to the present invention is shown. The coupling 10 comprises a gas container 11, a sealing ring 19, an adapter 12, a nut 13 and a valve 14 being partly shown.

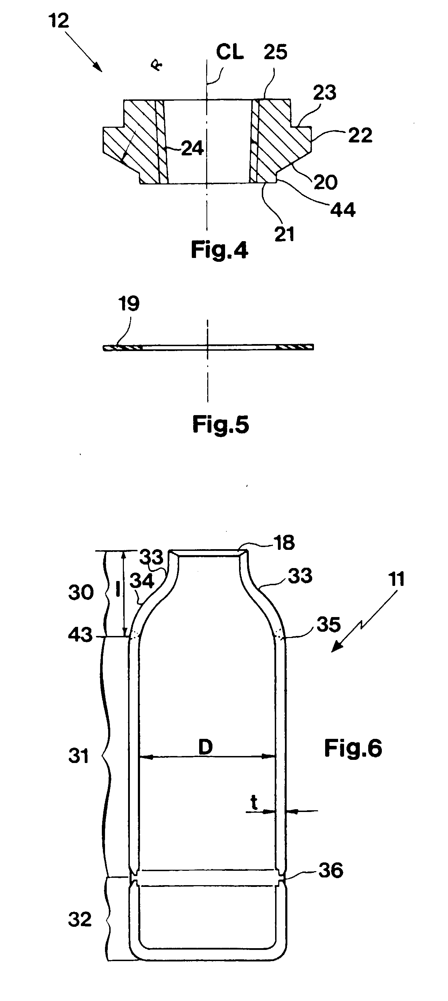

The gas container 11, which is described more in detail in connection with Fig. 6, has a neck 15, which is externally threaded. The inner surface 16 of the neck 15 is completely smooth and connects to a first contact surface 17. Said surface 17 connects in its turn to a plane, circular ring end surface 18. Since extreme demands of tightness are raised a design is used where the transition between the inner surface 16 and the end surface 18 consists of a softly rounded part suitably with a radius of about 2 - 4 mm. The container has a weld 43 arranged on a distance **l** from the end surface 18 of the neck 15, i.e. where the container has its greatest diameter for maximum strength against bending stresses. The container has a wall thickness **t** of about 1 to 10 % of the greatest diameter D of the container.

The sealing ring 19 has a circular ring form and is made of silver or other soft metallic material, for example nickel. The inner diameter of the ring is smaller than the inner diameter of the contact surface 17. The outer surface of the ring exceeds the outer diameter of the contact surface 17. The outer diameter of the ring is smaller than or the same as the outer diameter of the adapter described below. The adapter 12 has a circular basic form and its front surface comprises a partly spherical second contact surface 20, which radially inwards connects to an edge surface 44 and radially outwards to an edge surface 22. The edge surface 44 centers the sealing ring 19 in relation to the contact surface 20. The surface 20 is defined by a radius R. The edge surface 22 borders on a circular flange surface 23, which has its extension perpendicular to a central axis CL of the adapter, which is also the central axis of the coupling 10. A conically threaded bore 24 is concentrically arranged with said central axis, which bore has its extension between a plane circular ring-shaped surface 21 and an end surface 25 of the adapter. The cone angle of the bore is suitably 25 - 45°. The surfaces 21 and 25 are plano-parallel. The centre of the radius R is arranged on the central line CL at some distance from the end surface 25.

The nut 13 is of conventional type and comprises a flange surface 26 which has its extension perpendicular to the central line CL. The minimum diameter of the nut is smaller than the maxiumum diameter of the contact surface 17. The nut also comprises a stop screw 27.

The valve 14 has a hollow shaft 28, one end of which being conically threaded. A valve connection and a measuring device can be arranged in the other end of the shaft. The coupling is mounted in the following way. The shaft of the valve 14 is brought through the nut 13 and is lined with and threaded in the bore 24 of the adapter 12. Thereafter the threads are sealed at the end of the shaft and the front surface 21 by a weld 42 or a glue joint. The welding of the adapter and the valve means that these elements can be regarded as a non-detachable unit. Alternatively, said elements can be cast as a unit. Then, the plane sealing ring 19 is lined and put on the plane end surface 18 of the container neck 15 after which the adapter is applied to the ring 19 and the nut is moved towards the neck. The nut is screwed along the neck by a suitable tool, for example a wrench, so that the contact surface 26 of the nut is engaged with the flange surface 23 of the adapter, at which the partly spherical contact surface 20 of the adapter elastically or plastically deforms the ring 19 against the contact surface 17 of the neck. The ring essentially forms itself after the surfaces 20 and 17 and seals between said surfaces. The design of the surfaces 17 and 20 makes a circular, linear increase of pressure stresses in the coupling. Therefore, the material of the ring is displaced in the direction towards its inner and outer diameters which renders a safe sealing. The increase of said pressure stresses is independent on how carefully the adapter is applied to the neck. The reason is the rounded and partly spherical design, respectively, of the surfaces 17 and 20. The end surface 25 of the adapter lies essentially in the same plane as a top end surface 29 of the nut.

The obtained coupling conteracts the contamination of pure gases because of its lack of recesses. It is stable and not sensitive to the carfulness of the mounting.

In Fig. 6 a container 11 is shown arranged to contain pure gases under high pressure. For the sake of clarity the figure shows the container both before and after welding. The container is made of a stainless material having good weldability and excellent strength, such as a ferrite-austenitic stainless steel, a ferrite-martensitic stainless steel or similar. Ferrite-austenitic steels and ferrite-martensitic steels have considerably better strength than austenitic steels and they are therefore very well suited as materials in high pressure containers. The better suited the steel, the more slender the construction of the gas container, which means that the handling is simpler and that material is saved. These kinds of steels are also preferable compared to austenitic steels from a corrosion point of view because of a considerably better resistance to crevice corrosion. As an example of suitable ferrite-austenitic steels one may mention SAF 2205 with nominal analysis max 0.03 % C, 0.4 % Si, 1.6 % Mn, 22 % Cr, 5.5 % Ni, 3 % Mo and 0.14 % N. As another example one may mention SAF 2304 with an analysis comprising in % by weight 0.06 % C, 21-24.5 % Cr, 2-5.5 % Ni, 0.05-0.3 % N, max 1.5 % Si, max 2.0 % Mn, 0.01-1.0 % Mo, 0.01-1.0 % Cu, the rest Fe and normal impurities, at which the amounts of the components are so optimized that the content of ferrite is 35-65 %.

As another example of a ferrite-austenitic material one may mention SAF 2507 with the analysis max 0.05 % C, 23-27 % Cr, 5.5-9.0 % Ni, 0.25-0.40 % N, max 0.8 % Si, max 1.2 % Mn, 3.5-4.9 % Mo, max 0.5 % Cu, max 0.5 % W, max 0.010 % S, max 0.5 % V, Ce up to 0.18 %, the rest Fe and usual impurities, at which the amounts are adjusted so that the content of ferrite after solution heat treatment at 1075°C is 30-55 %.

As an example of a suitable ferrite-martensitic steel one may mention a steel alloy described in SE Patent Application No. 8704155-4 containing, in % by weight, max 0.1 C, 0.1-1.5 Si, 1.0-5.0 Mn, 17-22 Cr, 2.0-5.0 Ni, max 2.0 Mo, max 0.2 N and the remainder Fe and normally present impurities.

Other kinds of steel suitable for high pressure containers are austenitic stainless steels with enhanced contents of nitrogen. The nitrogen considerably improves the strength and has a favourable influence on the corrosion resistance.

In order to considerably differ from the strength of ordinary austenitic steels and to give intended weight reductions, it is necessary that the steels have a strength of at least 400 N/mm² and a simultaneous rupture elongation of at least 12 %. This is fulfilled by all preferred types of steels and these are in this connection designated as "high strength stainless steels". The container 11 comprises a top part 30, a mantle 31 and a bottom part 32. The weld between the top part and the mantle is indicated as 43. The portion of the top part 30 being situated between the neck 15 and the mantle is essentially spherically shaped.

The top part is provided with the above-mentioned neck 15 and, in the shown cross-section, has curved shoulders 33 which change into straight parts 34. The parts 34 end, in non-welded condition, in a base 35. The distance I between the end surface 18 and the base is about 50 to 150 % of the diameter D of the container. The mantle 31 consists of a cylindrical seamless tube, i.e. a tube which has no axially directed weld. The bottom part 32 consists of a forged or hot-pressed gable which has an upper edge 36. After preparation of the joint a preparation of the inner surfaces of the parts 30-32 follows, i.e. the inner surfaces are polished or etched to a surface evenness of at the most 3 µm, suitably less than 0.3 µm and preferably less than 0.1 µm, after which the parts are welded together.

The above-mentioned container counteracts the contamination of pure gases because of its excellent surface finish and it shows a very good strength.

## Claims

1. A coupling between a valve means (14) and a container (11) for enclosing pure gas under high pressure while resisting contamination thereof, said container having a neck (15) defining a longitudinal center axis (CL), said neck and said valve means including cooperating contact surfaces (17,20), at least one of said contact surfaces being of convexly curved shape as viewed in longitudinal section, a sealing ring (19) disposed between said contact surfaces, and a nut (13) for securing said valve means to said container neck, whereby said sealing ring is compressed between said contact surfaces, said container being comprised of a high strength stainless steel material containing ferrite and having a minimum strength of at least 400 N/mm² and a rupture elongation of at least 12 percent, an internal surface of said container forming a gas-containing chamber, said internal surface having a surface evenness such that the irregularities in said internal surface do not exceed 3 µm in height, one of said contact surfaces being of partly spherical shape as viewed in longitudinal section, the other of said contact surfaces consisting of a rounded part as viewed in longitudinal section.

## Patentansprüche

1. Kupplung zwischen einer Ventileinrichtung (14) und einem Behälter (11) für den Einschluß von Reingas unter hohem Druck bei einem Widerstand gegen Verunreinigung desselben, wobei der Behälter einen Hals (15) hat, der eine Längszentralachse (CL) definiert, wobei der Hals und die Ventileinrichtung miteinander zusammenwirkende Kontakflächen (17, 20) einschließen, wobei zumindest eine der Kontakflächen, gesehen im Längsschnitt, eine konvex gekrümmte Form hat, ein Dichtring (19) zwischen den Kontaktflächen angeordnet ist und eine Mutter (13) für das Befestigen der Ventileinrichtung an dem Behälterhals vorgesehen ist, wobei der Dichtring zwischen den Kontaktflächen zusammengepreßt wird, wobei der Behälter aus einem bruchfesten, rostfreien Stahlmaterial besteht, welches Ferrit enthält und eine minimale Festigkeit von zumindest etwa 400 n/mm² und eine Bruchdehnung von zumindest 12 % hat, eine innere Fläche des Behälters eine Gas enthaltende Kammer definiert, die innere Oberfläche eine Oberflächenebenheit derart hat, daß Unregelmäßigkeiten in der inneren Fläche in ihrer Höhe 3 µm nicht übersteigen, eine der Kontakflächen teilweise kugelige Form, im Längsschnitt gesehen, hat und die andere der Kontaktflächen aus einem abgerundeten Teil, im Längsschnitt gesehen, besteht.

## Revendications

1. Un raccord d'accouplement entre des moyens en forme de vanne (14) et un récipient (11) contenant un gaz pur sous haute pression, tout en empêchant sa contamination, ledit récipient comprenant un col (15) définissant un axe central longitudinal (CL), ledit col et lesdits moyens en forme de vanne comprenant des surfaces de contact associées (17, 20), au moins l'une desdites surfaces de contact étant, en coupe longitudinale, de forme incurvée convexe, un joint d'étanchéité (19) disposé entre lesdites surfaces de contact, et un écrou (13) pour fixer lesdits moyens en forme de vanne sur ledit col de récipient, de manière que ledit joint d'étanchéité annulaire soit comprimé entre lesdites surfaces de contact, ledit récipient étant composé d'un matériau d'acier inoxydable à haute résistance contenant de la ferrite et ayant une résistance minimale d'au moins 400 N/mm² et un allongement à rupture d'au moins 12 %, une surface intérieure dudit récipient formant une chambre contenant le gaz, ladite surface intérieure ayant une uniformité de surface telle que les irrégularités de ladite surface intérieure ne dépassent pas une hauteur de 3 micrcns, l'une desdites surfaces de contact étant, en coupe longitudinale, de forme partiellement sphérique, et l'autre surface de contact étant en coupe longitudinale, constituée d'une partie arrondie.
